# EUROPEAN PATENT APPLICATION

(11) **EP 2 306 218 A1**
(43) Date of publication of application: **06.04.2011**
(21) Application number: 09770262.5
(22) Date of filing: 26.06.2009
(51) Int. Cl.: G01S 13/89, G01V 3/12

(54) **MILLIMETER WAVE IMAGE PICKUP DEVICE**

(30) Priority: 27.06.2008 JP 2008168864
(71) Applicant: Masprodenkoh Kabushikikaisha, Nisshin-shi, Aichi 470-0194 (JP); Chuo Electronics Co., Ltd., Hachioji-shi, Tokyo 192-0051 (JP); Tohoku University, Aoba-ku Sendai-shi Miyagi 980-8577 (JP)
(72) Inventor: UEMURA, Jun, Nisshin-shi Aichi 470-0194 (JP); TAKEDA, Masamune, Nisshin-shi Aichi 470-0194 (JP); YAMADA, Kota, Nisshin-shi Aichi 470-0194 (JP); HASEGAWA, Tsuyoshi, Hachioji-shi Tokyo 192-0051 (JP); HIRAI, Haruyuki, Hachioji-shi Tokyo 192-0051 (JP); NIIKURA, Hirotaka, Hachioji-shi Tokyo 192-0051 (JP); MATSUZAKI, Tomohiko, Hachioji-shi Tokyo 192-0051 (JP); SATO, Hiroyasu, Sendai-shi Miyagi 980-8577 (JP); SAWAYA Kunio, Sendai-shi Miyagi 980-8577 (JP); MIZUNO, Koji, Sendai-shi Miyagi 980-8577 (JP)
(74) Representative: Roth, Klaus
(86) International application number: PCT/JP2009/061757
(87) International publication number: WO 2009/157552

(57) **Abstract**

A millimeter wave imaging apparatus includes: an imaging device including a plurality of millimeter wave sensors that are arranged in a planar manner and receive millimeter waves radiated from a subject to detect signal levels thereof; and an image data generation device that generates image data of the subject based on an output from each of the millimeter wave sensors constituting the imaging device. The millimeter wave imaging apparatus also includes: a temperature sensor that detects a temperature of the imaging device; and a storage device that stores, with respect to the each of the millimeter wave sensors constituting the imaging device, temperature characteristics data indicating a relationship between the temperature detected by the temperature sensor and the output from the millimeter wave sensor. The image data generation device obtains a deviation of the output from the each of the millimeter wave sensors from reference temperature characteristics based on the temperature detected by the temperature sensor and the temperature characteristics data stored by the storage device, corrects the output from the each of the millimeter wave sensors based on the deviation, and thereby generates the image data.

## Description

### TECHNICAL FIELD

The present invention relates to a millimeter wave imaging apparatus that receives millimeter waves radiated from a subject such as a human body thereby to image the subject.

### BACKGROUND ART

Conventionally, it has been proposed to receive millimeter waves radiated from a subject such as a human body thereby to image the subject and detect a metallic or non-metallic weapon or smuggled goods hidden in the subject from the captured image (see, for example, Patent Documents 1, 2 and others).

A millimeter wave imaging apparatus used in the above proposal usually includes: a millimeter wave sensor array including a plurality of millimeter wave sensors arranged on an identical plane, and a lens that focuses millimeter waves radiated from a subject such as a human body to form a millimeter wave image on a millimeter wave receiving surface of the millimeter wave sensor array. The millimeter wave imaging apparatus is configured to receive signal levels of receiving signals from the respective millimeter wave sensors constituting the millimeter wave sensor array as pixel values of a subject image, thereby to capture the subject image.
Patent Document 1: Japanese Unexamined Patent Application Publication No. 2006-258496
Patent Document 2: Japanese Patent Publication No. 2788519

### DISCLOSURE OF THE INVENTION

### PROBLEMS TO BE SOLVED BY THE INVENTION

In the millimeter wave imaging apparatus which generates a millimeter wave image of a subject using a millimeter wave sensor array constituted by a plurality of millimeter wave sensors, as described above, there sometimes happens that a clear captured image cannot be obtained due to variation in temperature characteristics of the millimeter wave sensors, and thus accuracy in detecting an inspection target object from the captured image is deteriorated.

Specifically, since the millimeter wave sensor includes a millimeter wave antenna and signal processing circuits (an amplifier circuit, a filter circuit, a detector circuit, etc.) which process receiving signals from the millimeter wave antenna, there is caused variation in outputs from the respective millimeter wave sensors due to temperature characteristics inherent to these millimeter wave antenna and signal processing circuits, and the variation results in an unclear image finally obtained, and thus deterioration in detection accuracy of an inspection target object.

The present invention, which has been made in view of such problem, has an objective to provide a millimeter wave imaging apparatus that captures a two-dimensional image of a subject using a plurality of millimeter wave sensors, in which the captured image is prevented from being unclear due to variation in temperature characteristics of the respective millimeter wave sensors.

### MEANS FOR SOLVING THE PROBLEMS

A millimeter wave imaging apparatus according to a first aspect of the invention made to accomplish the objective includes: an imaging device including a plurality of millimeter wave sensors that are arranged in a planar manner and receive millimeter waves radiated from a subject to detect signal levels thereof; and an image data generation device that generates image data of the subject based on an output from each of the millimeter wave sensors constituting the imaging device. The millimeter wave imaging apparatus also includes: a temperature sensor that detects a temperature of the imaging device; and a storage device that stores, with respect to the each of the millimeter wave sensors constituting the imaging device, temperature characteristics data indicating a relationship between the temperature detected by the temperature sensor and the output from the millimeter wave sensor. The image data generation device obtains a deviation of the output from the each of the millimeter wave sensors from reference temperature characteristics based on the temperature detected by the temperature sensor and the temperature characteristics data stored by the storage device, corrects the output from the each of the millimeter wave sensors based on the deviation, and thereby generates the image data.

### EFFECTS OF THE INVENTION

In the millimeter wave imaging apparatus in the first aspect of the invention includes a temperature sensor that detects a temperature of the imaging device; and a storage device that stores temperature characteristics data indicating a relationship between the temperature detected by the temperature sensor and the output from the millimeter wave sensor. The image data generation device obtains a deviation of the output from the each of the millimeter wave sensors from reference temperature characteristics based on the temperature detected by the temperature sensor and the temperature characteristics data stored by the storage device, corrects the output from the each of the millimeter wave sensors based on the deviation, and thereby generates image data.

According to the millimeter wave imaging apparatus of the invention, therefore, it is possible not only to image a subject using millimeter waves radiated from the subject, but also, even if there is variation in temperature characteristics of the plurality of millimeter wave sensors used for imaging, to correct variation of each of the millimeter wave sensors and generate image data. Thus, it is possible to constantly capture a clear image of the subject and detect an inspection target object hidden in the subject in an accurate manner from the captured image, according to the millimeter wave imaging apparatus of the invention.

### BRIEF DESCRIPTION OF THE DRAWINGS

FIG. 1 is a block diagram showing a configuration of an entire millimeter wave imaging apparatus according to an embodiment.
FIG. 2 is an explanatory view showing a configuration of a millimeter wave sensor.
FIG. 3 is an explanatory view illustrating temperature characteristics data stored in a storage section.
FIG. 4 is an explanatory view illustrating input-output characteristics of the millimeter wave sensor and a linear region for imaging.
FIG. 5 is a flowchart showing a subject inspection process executed by an image processor.

### DESCRIPTION OF REFERENCE NUMERALS

2...subject, 4...inspection target object, 10...millimeter wave imaging apparatus, 12...lens antenna, 14...millimeter wave sensor array, 16...input section, 18... temperature sensor, 20...image processor, 22...operation section, 24...storage section, 26...display controller, 28...display unit, 30...millimeter wave sensor, 32...receiving antenna, 34...LNA (Low Noise Amplifier), 36...BPF (Band Pass Filter), 38... detector circuit.

### BEST MODE FOR CARRYING OUT THE INVENTION

An embodiment of the present invention will hereinafter be described.

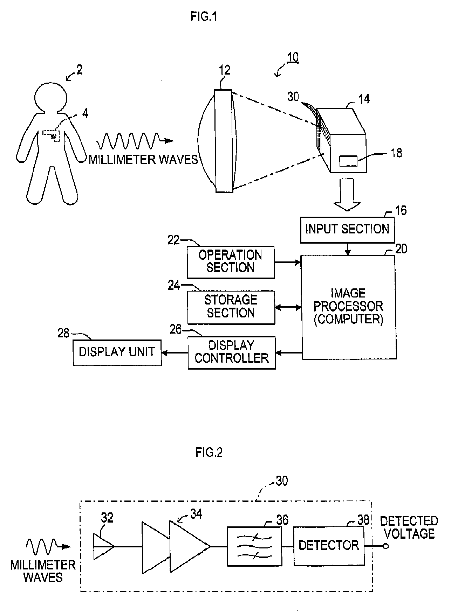

Fig. 1 is a block diagram showing a configuration of a millimeter wave imaging apparatus 10 to which the invention is applied. The millimeter wave imaging apparatus 10 of the present embodiment is used to check whether or not a passenger hides a dangerous object (an inspection target object 4) at an airport and the like. The apparatus includes a lens antenna 12 that receives millimeter waves radiated from a subject 2 in the apparatus and forms a subject image using the millimeter waves, a millimeter wave sensor array 14 that is arranged at an image forming position of the subject image by the lens antenna 12 to capture a subject image by receiving millimeter waves, and an image processor 20 that receives an output from the millimeter wave sensor array 14 through an input section 16 constituted by an A/D converter or the like and generates image data for the subject 2.

The millimeter wave sensor array 14 includes a plurality of millimeter wave sensors 30, configured as shown in FIG. 2, each as an imaging element for one pixel of a captured image, and is configured to be capable of capture a two-dimensional image for predetermined pixels in height and width by arranging the plurality of millimeter wave sensors 30 in a planar manner.

The millimeter wave sensor array 14 also includes a temperature sensor 18 for detecting a temperature thereof. A detected signal from the temperature sensor 18 is also inputted to the image processor 20 through the input section 16.

As shown in FIG. 2, the millimeter wave sensor 30 includes: a receiving antenna 32 for receiving millimeter waves, a low noise amplifier (LNA) 34 that amplifies received signals from the receiving antenna 32, a band pass filter (BPF) 36 that selectively allows passage of a received signal of a predetermined frequency band (for example, a 75-GHz band) suitable for detection of the inspection target object 4 among received signals amplified by the LNA 34, and a detector circuit 38 that detects the received signal which has passed the BPF 36 and detects a signal level thereof.

Accordingly, each of the millimeter wave sensors 30 constituting the millimeter wave sensor array 14 outputs a detected voltage in accordance with a signal level of a millimeter wave received at each receiving point. The image processor 20 sequentially receives detected voltages from the respective millimeter wave sensors 30 through the input section 16 to generate image data.

Also, to the image processor 20, which is constituted by a computer having an image processing function, an operation section 22 including a mouse and a keyboard, a storage section 24 including a hard disk and the like, and a display controller 26 for displaying the captured image of the subject 2 or the like on the display unit 28 are connected.

The image processor 20 not only displays the captured image of the subject 2 on the display unit 28, but also processes image data to determine whether or not the inspection target object 4 is hidden in the subject 2, and displays a location and a type of the inspection target object 4 on the display unit 28 if the inspection target object 4 is hidden.

When the captured image of the subject 2 is displayed on the display unit 28 or the inspection target object 4 is detected from the captured image in the image processor 20, variation in characteristics, if present, among the plurality of millimeter wave sensors 30 constituting the millimeter wave sensor array 14 may result in the following problems: there is also caused variation in respective pixel values constituting image data, and thereby the captured image displayed on the display unit 28 becomes unclear and detection accuracy of the inspection target object 4 is deteriorated.

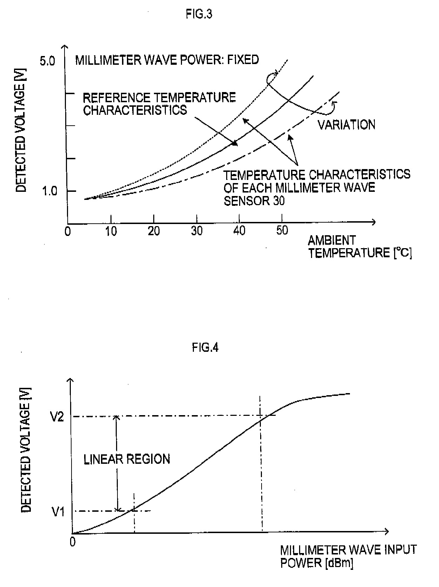

Accordingly, the present embodiment is configured such that temperature characteristics of a detected voltage outputted when a millimeter wave of a fixed power is inputted are measured with respect to each of the millimeter wave sensors 30 constituting the millimeter wave sensor array 14, thereby to generate temperature characteristics data as exemplified in FIG. 3, and the generated temperature characteristics data is stored in the storage section 24.

When imaging the subject 2 by the image processor 20, a correction factor against the detected voltage from each of the millimeter wave sensors 30 is obtained based on the temperature characteristics data for the each of the millimeter wave sensors 30 stored in the storage section 24 and on a temperature of the millimeter wave sensor array 14. Then the pixel value (in other words, the detected voltage of each of the millimeter wave sensors 30) of the image data obtained by output from each of the millimeter wave sensors 30 is multiplied by the correction factor, and thereby the image data is corrected.

In the present embodiment, the temperature characteristics data used to correct the variation in the detected voltages is obtained by measuring a relationship between temperature and detected voltage when an input power of millimeter waves to the millimeter wave sensor 30 is fixed. This is because an operational region of the millimeter wave sensor 30 is set in a linear region (see FIG. 4) in which the input power of millimeter waves and the detected voltage are in a proportional relation.

Specifically, if the operational region of the millimeter wave sensor 30 while imaging the subject 2 is set in a region outside the linear region shown in FIG. 4, sensitivity during imaging is lowered, and a detection accuracy of the inspection target object 4 is deteriorated. Thus, the operational region of the millimeter wave sensor 30 is usually set in the linear region (see FIG. 4) in which the detected voltage changes from V1 to V2.

In the present embodiment, therefore, the temperature characteristics data of the detected voltage when the input power of millimeter waves to the millimeter wave sensor 30 is a fixed power in the operational region of the millimeter wave sensor 30 is previously set, and a deviation in wave voltage (specifically a ratio of the detected voltage to a reference voltage) caused under operating temperature conditions of the millimeter wave sensor 30 is obtained using the temperature characteristics data. Then, the detected voltage obtained from the millimeter wave sensor 30 is corrected so as to eliminate the deviation (in other words, so as to make the ratio "1").

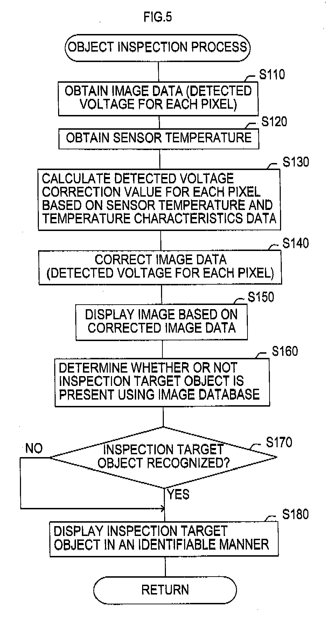

A subject inspection process executed by the image processor 20 as above in order to generate image data and detect an inspection target object 4 will hereinafter be described by means of the flowchart shown in FIG. 5.

As shown in FIG. 5, when the subject inspection process is started, first in S110 (S means a step), detected voltages are sequentially received from the respective millimeter wave sensors 30 constituting the millimeter wave sensor array 14 through the input section 16, and image data before correction, in which the received respective detected voltages are used as pixel values of respective pixels of the captured image, is generated.

In subsequent S120, a temperature of the millimeter wave sensor array 14 (a sensor temperature) is read from the temperature sensor 18 through the input section 16. In subsequent S130, a detected voltage correction value to correct the detected voltage from each of the millimeter wave sensors 30 (in other words, each pixel value of the image data before correction) is calculated based on the read sensor temperature and the temperature characteristics data for each of the millimeter wave sensors 30 previously stored in the storage section 24.

The detected voltage correction value is calculated for each of the millimeter wave sensors 30 according to the following steps: a detected voltage Vs corresponding to a current sensor temperature is obtained using the temperature characteristics data as described above; a ratio (Vs/Vo) between the detected voltage Vs and a reference detected voltage Vo obtained using reference temperature characteristics data is calculated; and the ratio is used as the detected voltage correction value.

When detected voltage correction values for all the millimeter wave sensors 30 constituting the millimeter wave sensor array 14 have been calculated in S130, the process proceeds to S140, in which image data is corrected by multiplying the pixel value (that is, the detected voltage received from each of the millimeter wave sensors 30) constituting each of the pixels of the image data generated in S110 by the detected voltage correction value of the corresponding millimeter wave sensor 30.

When the image data is corrected in S140, the process proceeds to S150, in which the captured image of the subject 2 is displayed on the display unit 28 through the display controller 26 based on the corrected image data.

Next, in subsequent S160, it is determined whether or not an image having substantially the same shape as any of the inspection target objects 4 is present in the captured image by searching the captured image data based on data of shapes of the inspection target objects 4 previously stored in the storage section 24.

Then, in subsequent S170, it is determined whether or not an image of the inspection target object 4 is recognized to be present in the captured image in S160. When an image of the inspection target object 4 is not recognized, the present process is temporarily terminated, and the process proceeds to S110 again. On the contrary, when an image of the inspection target object 4 is recognized, a symbol mark schematically representing the recognized inspection target object 4 is displayed overlapping the captured image being displayed on the display unit 28, and the process proceeds to S110 again.

In the millimeter wave imaging apparatus 10 in the present embodiment, as described above, when generating image data representing the captured image of the subject 2 based on outputs from the millimeter wave sensors 30 constituting the millimeter wave sensor array 14 in the subject inspection process executed by the image processor 20, a correction factor is obtained for each pixel of the image data based on the temperature characteristics data for each of the millimeter wave sensors 30 stored in the storage section 24 and the temperature of the millimeter wave sensor array 14, and the corresponding pixel value (in other words, the detected voltage of the each of the millimeter wave sensors 30) is multiplied by the correction factor, and thereby the image data is corrected.

According to the millimeter wave imaging apparatus 10 in the present embodiment, therefore, it is possible not only to image the subject 2 using millimeter waves radiated from the subject 2, but also to constantly obtain a clear captured image without being affected by variation, if any, in temperature characteristics among the plurality of millimeter wave sensors 30 used for imaging. Consequently, when an image of the subject 2 is captured using the millimeter wave imaging apparatus 10 in the present embodiment, it is possible to detect an inspection target object hidden in the subject 2 in an accurate manner from the captured image.

Especially, in the millimeter wave imaging apparatus 10 in the present embodiment, the image processor 20 compares the image data representing the captured image of the subject 2 and the data of shapes of the inspection target objects 4 previously stored in the storage section 24, thereby to detect an inspection target object 4 hidden in the subject 2, and displays the detection result (a symbol mark of the inspection target object) on the display unit 28 together with the subject image. Accordingly, an inspector can easily identify the inspection target object hidden in the subject 2 while viewing the displayed image on the display unit 28, and can take optimum security measures depending on a type of the identified inspection target object.

In the present embodiment, the millimeter wave sensor array 14 corresponds to an imaging device of the invention, the image processor 20 corresponds to an image data generation device of the invention, and the storage section 24 corresponds to a storage device of the invention.

Although one embodiment of the present invention has been described above, the invention should not be limited to the above embodiment, but can be practiced in various manners without departing from the scope of the invention.
For example, it is described in the above embodiment that the millimeter wave imaging apparatus 10 is for checking whether or not a passenger hides a dangerous object in an airport or the like, and that the subject 2 is a passenger. However, the millimeter wave imaging apparatus of the present invention may be used for imaging a subject other than a human body, such as baggage, package, etc., and determining from the captured image whether or not an inspection target object hidden in the baggage or package is present.

## Claims

1. A millimeter wave imaging apparatus comprising:
an imaging device including a plurality of millimeter wave sensors that are arranged in a planar manner and receive millimeter waves radiated from a subject to detect signal levels thereof;
an image data generation device that generates image data of the subject based on an output from each of the millimeter wave sensors constituting the imaging device;
a temperature sensor that detects a temperature of the imaging device; and
a storage device that stores, with respect to the each of the millimeter wave sensors constituting the imaging device, temperature characteristics data indicating a relationship between the temperature detected by the temperature sensor and the output from the millimeter wave sensor,
wherein the image data generation device obtains a deviation of the output from the each of the millimeter wave sensors from reference temperature characteristics based on the temperature detected by the temperature sensor and the temperature characteristics data stored by the storage device, corrects the output from the each of the millimeter wave sensors based on the deviation, and thereby generates the image data.
